# EUROPÄISCHE PATENTANMELDUNG

(11) **EP 3 232 652 A1**
(43) Veröffentlichungstag der Anmeldung: **18.10.2017**
(21) Anmeldenummer: 17163534.5
(22) Anmeldetag: 29.03.2017
(51) Int. Cl.: H04M 3/533, H04M 3/487

(54) **SPRACH-MAILBOX MIT ANASGE DER AUFNAHMEZEIT EINER NACHRICHT BEI ABFRAGE AUS DEM AUSLAND**

(30) Priorität: 13.04.2016 DE 102016106812
(71) Anmelder: Deutsche Telekom AG, 53113 Bonn (DE)
(72) Erfinder: Opitz, Johannes, 50672 Köln (DE)
(74) Vertreter: Braun-Dullaeus Pannen Patent- und Rechtsanwälte

(57) **Zusammenfassung**

Die Erfindung betrifft ein Verfahren zur Information eines Telekommunikationsteilnehmers 1 im Ausland 11, wobei der Telekommunikationsteilnehmer 1 einem Telekommunikationsanbieter 100 in einem Heimatland 10 durch eine Kundenbeziehung zugeordnet ist, und wobei das Heimatland 10 eine erste Zeitzone I und das Ausland 11 eine zweite Zeitzone II aufweist. Bei der Nutzung einer vom Telekommunikationsanbieter 100 bereitgestellten Mailbox 12 wird wenigstens eine Information 13 über die erste Zeitzone I und die zweite Zeitzone II an den Telekommunikationsteilnehmer 1 per Sprachansage übermittelt.

## Beschreibung

Die vorliegende Erfindung betrifft ein Verfahren zur Information eines Telekommunikationsteilnehmers im Ausland, wobei der Telekommunikationsteilnehmer einem Telekommunikationsanbieter in einem Heimatland durch eine Kundenbeziehung zugeordnet ist, und wobei das Heimatland eine erste Zeitzone und das Ausland eine zweite Zeitzone aufweist, wobei bei Nutzung einer vom Telekommunikationsanbieter bereitgestellten Mailbox wenigstens eine Information über die erste Zeitzone und die zweite Zeitzone an den Telekommunikationsteilnehmer übermittelt wird.

### STAND DER TECHNIK

Die DE 198 37 460 A1 offenbart beispielsweise ein Verfahren zur Echtzeitvergebührung von Telekommunikationsverbindungen bei einem Aufenthalt eines Teilnehmers in einem Ausland und damit außerhalb des Heimatnetzes. Offenbart ist dabei eine Telekommunikationsverbindung zwischen einem Endgerät eines Telekommunikationsteilnehmers, der sich mit dem Endgerät im Ausland befindet, und dem Telekommunikationsanbieter, wobei der Telekommunikationsanbieter einen Server im Heimatland betreibt. Das sogenannte Roaming beschreibt dabei die Möglichkeit des Telekommunikationsteilnehmers im Ausland, und damit in einem fremden Netz, Anrufe selbsttätig zu empfangen oder zu tätigen bzw. sonstige Mobilfunkservices in Anspruch nehmen zu können.

Beim Roaming ist dabei bereits bekannt oder übliche Praxis, dass bei der Umleitung von eingehenden Anrufen zu einer Mailbox grundsätzlich der Zeitstempel des Heimatnetzes des jeweiligen Telekommunikationsanbieters erscheint und/oder es wird dem Telekommunikationsteilnehmer per automatischer Ansage der Zeitstempel mitgeteilt. Der Zeitstempel betrifft dabei beispielsweise den Tag, insbesondere jedoch die Uhrzeit im Heimatland, zu der zum Beispiel der Anruf auf der Mailbox eingegangen ist.

Für Telekommunikationsteilnehmer, die sich in der Zeitzone des Heimatlandes befinden, ist der Nutzen dieser Information offensichtlich. Der Telekommunikationsteilnehmer weiß durch die Information sofort, wann der Anruf auf der Mailbox eingegangen ist, sodass leicht zu bestimmen ist, welche Zeit seit dem Anruf verstrichen ist und wann beispielsweise der beste Zeitpunkt für einen Rückruf des Teilnehmers gegeben ist, der die Mailbox besprochen hat. Ein Telekommunikationsteilnehmer, der sich in einer anderen Zeitzone aufhält, muss sich diese Informationen jedoch erst aus der Zeitdifferenz zur Zeitzone des Heimatlandes ausrechnen.

Aus der WO 99/39499 A2 ist ein Verfahren bekannt, das den auf der Mailbox gespeicherten Nachrichten sowohl eine Information bezüglich einer ersten Zeitzone, in der sich der Telekommunikationsteilnehmer aufhält, und eine Information bezüglich einer zweiten Zeitzone, in der sich der Anrufer aufgehalten hat, zuordnet. Die Informationen ist an den Zeitstempeln der gespeicherten Nachrichten abzulesen.

Nutzung einer vom Telekommunikationsanbieter bereitgestellten Mailbox wenigstens eine Information über die erste Zeitzone und die zweite Zeitzone an den Telekommunikationsteilnehmer übermittelt wird

### OFFENBARUNG DER ERFINDUNG

Aufgabe der Erfindung ist die Bereitstellung eines Verfahrens zur verbesserten Information eines Telekommunikationsteilnehmers im Ausland. Insbesondere betrifft die Erfindung die Erhöhung einer Servicequalität durch eine Mehrinformation des Telekommunikationsteilnehmers im Ausland.

Überdies betrifft die Erfindung ein Telekommunikationssystem mit einem Server eines Telekommunikationsanbieters zur Ausführung des Verfahrens.

Das erfindungsgemäße Verfahren sieht zur Lösung der Aufgabe vor, dass bei Nutzung einer vom Telekommunikationsanbieter bereitgestellten Mailbox wenigstens eine Information über die erste Zeitzone und über die zweite Zeitzone an den Telekommunikationsteilnehmer übermittelt wird, wobei die Information mittels einer Sprachansage an den Telekommunikationsteilnehmer übermittelt wird, die vor der Wiedergabe eines auf der Mailbox gespeicherten und wiedergegebenen Anrufes per automatischer Sprachansage angesagt wird.

Durch entsprechend eingerichtete Server der Telekommunikationsanbieter ermitteln diese automatisch, zu welchem Zeitpunkt sich der Telekommunikationsteilnehmer in welcher Zeitzone gegenwärtig befindet. Ruft der Telekommunikationsteilnehmer die Mailbox auf dem Server des Telekommunikationsanbieters an, so erhält der Telekommunikationsteilnehmer die Information per Sprachansage über wenigstens die erste Zeitzone und die zweite Zeitzone mit der jeweiligen Uhrzeit, woraus der Telekommunikationsanbieter ableiten kann, zu welchem Zeitpunkt im Heimatland und zu welchem Zeitpunkt im Ausland der Anruf auf die Mailbox eingegangen ist. Damit ist der Telekommunikationsteilnehmer sofort orientiert, wann der Anruf zur jeweiligen lokalen Zeit eingegangen ist, wie viel Zeit seit dem Eingang des Anrufs auf der Mailbox vergangen ist und wann zum Beispiel der beste Zeitpunkt für einen Rückruf gekommen ist. Telekommunikationsteilnehmer, die einen Rückruf tätigen, erreichen so ihren Gesprächspartner, der den Anruf auf der Mailbox getätigt hat, mit einer höheren Wahrscheinlichkeit, und die Anzahl erfolgloser Rückrufe wird reduziert, beziehungsweise die Wahrscheinlichkeit eines Rückrufes wird verbessert, da die Erfolgswahrscheinlichkeit, den Gesprächspartner zu erreichen, gestiegen ist.

Die Nutzung der Mailbox erfolgt insbesondere durch einen Anruf der Mailbox durch den Telekommunikationsteilnehmer aus dem Ausland. Andere Nutzungsmöglichkeiten der Mailbox sind dabei ebenfalls denkbar, beispielsweise durch eine Ausgabe des Mailboxanrufes als Textnachricht auf das Endgerät des Telekommunikationsteilnehmers im Ausland. Dabei könnte die Information zusätzlich per Textnachricht auf dem Display des Endgerätes des Telekommunikationsteilnehmers angezeigt werden. In diesem Fall kann schon die Textnachricht die Information über die beiden Zeitzonen beispielsweise in Form zweier Zeitstempel enthalten, so dass der Kunde auf einen Blick sieht, zu welcher Zeit der Anruf aus dem Heimatnetz erfolgte.

Erfindungsgemäß erfolgt die Information primär als Sprachansage an den Telekommunikationsteilnehmer, sodass die Information vor der eigentlichen Wiedergabe des auf der Mailbox gespeicherten und wiedergegebenen Anrufes per automatischer Ansage angesagt wird. Ruft also der Telekommunikationsteilnehmer aus dem Ausland die Mailbox an, so erfolgt zunächst die Wiedergabe der Information umfassend wenigstens die erste Zeitzone und die zweite Zeitzone, und anschließend erfolgt die Wiedergabe des gespeicherten Anrufes der Mailbox.

Mit weiterem Vorteil sieht die automatische Ansage vor der Nachricht auf der Mailbox zunächst die Ansage der ersten Zeitzone des Heimatlandes vor, wobei nach der Ansage der ersten Zeitzone die Ansage der zweiten Zeitzone des Auslandes vorgesehen ist. Schließlich kann nach der Ansage der ersten Zeitzone und der Ansage der zweiten Zeitzone eine weitere Ansage erfolgen, die eine zusätzliche Information beispielsweise über eine regelmäßig bevorzugte Rückrufzeit zum Rückruf des Teilnehmers ausgegeben wird, der die Mailbox besprochen hat. Die bevorzugte Rückrufzeit kann beispielsweise eine übliche Tageszeit betreffen, die als Zeit im Heimatland und als Zeit im Ausland angesagt wird, sodass beide Zeitzonen für die optimale Rückrufzeit an den Telekommunikationsanbieter ausgegeben werden.

Die Ansage der ersten Zeitzone und die Ansage der zweiten Zeitzone umfassen dabei jeweils einen Wochentag und eine jeweilige Uhrzeit. Die Ansage kann dabei beispielsweise auch in der Sprache des Heimatlandes und zusätzlich in der Sprache des Auslandes erfolgen.

Mit weiterem Vorteil wird mit der Ansage der weiteren Information zusätzlich angesagt, dass der Teilnehmer in einer bevorzugten Zeitspanne in seinem aktuellen Ausland zurückgerufen werden könnte, worauf die Ansage der Zeitspanne in der zweiten Zeitzone erfolgt.

Die Erfindung richtet sich weiterhin auf ein Telekommunikationssystem mit einem Server eines Telekommunikationsanbieters zur Ausführung eines Verfahrens zur Information eines Telekommunikationsteilnehmers im Ausland, wobei der Telekommunikationsteilnehmer dem Telekommunikationsanbieter in einem Heimatland durch eine Kundenbeziehung zugeordnet ist, und wobei das Heimatland eine erste Zeitzone und das Ausland eine zweite Zeitzone aufweist. Erfindungsgemäß ist der Server dazu ausgebildet, dass bei Nutzung einer vom Telekommunikationsanbieter bereitgestellten Mailbox wenigstens eine Information über die erste Zeitzone und die zweite Zeitzone an den Telekommunikationsteilnehmer übermittelt wird. Dabei ist es unwesentlich, in welchem Land und entsprechend in welcher Zeitzone der Server selber eingerichtet ist. Er muss nicht im Heimatland des Kunden und/oder des Telekommunikationsanbieters stehen, sondern lediglich über die beiden erfindungsgemäßen Zeitzonen informiert sein, um entsprechende Informationen an den Telekommunikationsteilnehmer per Sprachansage übermitteln zu können.

Die Einrichtung des erfindungsgemäßen Service kann automatisch oder auf ausdrücklichen Kundenwunsch geschehen. Der Kunde kann sich im einfachsten Fall per SMS oder Online an seinen Telekommunikationsanbieter wenden. Er kann die Einrichtung auch telefonisch über ein Callcenter oder persönlich in einem Shop vornehmen. Besonders kundenfreundlich ist sicherlich eine automatische Einrichtung, die erkennt, dass sich der Kunde in einer anderen Zeitzone befindet und den Server entsprechend instruiert.

Die weiteren Merkmale und zugeordneten Vorteile, die vorstehend in Zusammenhang mit dem Verfahren aufgeführt sind, finden für das erfindungsgemäße Telekommunikationssystem ebenfalls Berücksichtigung.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematische Ansicht des Roamings mit einem Telekommunikationsanbieter in einem Heimatland und einem Telekommunikationsteilnehmer in einem Ausland und
- Figur 2: den Ablauf der Ansage einer Mailbox, die von einem Teilnehmer aus dem Ausland abgehört wird, wobei eine Information einem gespeicherten Anruf vorweggeht.

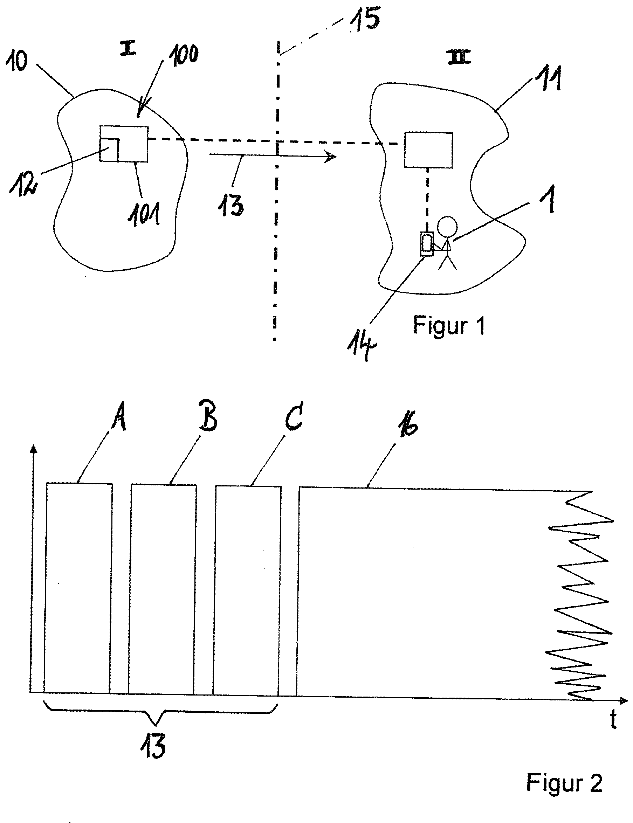

Figur 1 zeigt schematisch zwei Zeitzonen I und II, wobei das Heimatland 10 in der ersten Zeitzone I liegt und wobei das Ausland 11 in der zweiten Zeitzone II liegt. Die beiden Zeitzonen sind dabei durch eine Zeitzonengrenze 15 schematisch voneinander getrennt.

Der Telekommunikationsanbieter 100 betreibt einen Server 101 im Heimatland 10, wobei schematisch eine Mailbox 12 als Teil des Servers 101 dargestellt ist.

Der Telekommunikationsteilnehmer 1 befindet sich in der zweiten Zeitzone II im Ausland 11, und verfügt über ein Endgerät 14, mit dem der Telekommunikationsteilnehmer 1 über das an sich bekannte Roaming die Mailbox 12 des Servers 101 im Heimatland 10 des Telekommunikationsanbieters 100 anruft. Der Verbindungsaufbau ist dabei über gestrichelte Linien dargestellt.

Bei der so erfolgten Nutzung der Mailbox 12 erhält der Telekommunikationsteilnehmer 1 vor der Wiedergabe des gespeicherten Anrufes auf der Mailbox 12 eine Information 13, die mit einem Pfeil angedeutet vom Server 101 an das Endgerät 14 des Telekommunikationsteilnehmers 1 per Sprachansage ausgegeben wird.

Die Information 13 umfasst dabei wenigstens die Information über die erste Zeitzone I und die Information über die zweite Zeitzone II, wobei beide Zeitzonen beispielsweise mit der Angabe eines Wochentages und einer Uhrzeit per Sprachansage ausgegeben werden.

Figur 2 zeigt in einer schematischen Darstellung die Ausgabe der Information 13 über der Zeit t, welche Information 13 bei Aufnahme eines Anrufes der Mailbox 12 der Wiedergabe des gespeicherten Anrufes 16 vorweggeht. Die Ansage A betrifft dabei die Wiedergabe der ersten Zeitzone I, die Ansage B betrifft die Wiedergabe der zweiten Zeitzone II. Zusätzlich wird eine Ansage C ausgegeben, die weitere Informationen enthält, beispielsweise zu welcher aktuellen Zeit im Ausland 11 betreffend die zweite Zeitzone II der Anrufer optimalerweise zurückgerufen werden kann. Beispielsweise betrifft die bevorzugte Uhrzeit zum Rückruf eine Zeit von 8:00 Uhr bis 20:00 Uhr, wobei die Ansage in der lokalen Zeit im Ausland 11 erfolgt, sodass der Telekommunikationsteilnehmer 1 nicht auf die Heimatzeit zurückrechnen muss.

### Bezugszeichenliste

- 100: Telekommunikationsanbieter
- 101: Server
- 1: Telekommunikationsteilnehmer
- 10: Heimatland
- 11: Ausland
- 12: Mailbox
- 13: Information
- 14: Endgerät
- 15: Zeitzonengrenze
- 16: gespeicherter Anruf

- A: Ansage der ersten Zeitzone I
- B: Ansage der zweiten Zeitzone II
- C: Ansage der weiteren Information

- I: erste Zeitzone
- II: zweite Zeitzone

- t: Zeit

## Patentansprüche

1. Verfahren zur Information eines Telekommunikationsteilnehmers (1) im Ausland (11), wobei der Telekommunikationsteilnehmer (1) einem Telekommunikationsanbieter (100) in einem Heimatland (10) durch eine Kundenbeziehung zugeordnet ist und wobei das Heimatland (10) eine erste Zeitzone (I) und das Ausland (11) eine zweite Zeitzone (II) aufweist, wobei bei Nutzung einer vom Telekommunikationsanbieter (100) bereitgestellten Mailbox (12) wenigstens eine Information (13) über die erste Zeitzone (I) und die zweite Zeitzone (II) an den Telekommunikationsteilnehmer (1) übermittelt wird,
**dadurch gekennzeichnet, dass** die Information (13) mittels einer Sprachansage an den Telekommunikationsteilnehmer (1) übermittelt wird, die vor der Wiedergabe eines auf der Mailbox gespeicherten und wiedergegebenen Anrufes (16) per automatischer Sprachansage angesagt wird.

2. Verfahren nach einem der Ansprüche 1, **dadurch gekennzeichnet, dass** die Information (13) zusätzlich per Textnachricht auf einem Display eines Endgerätes (14) des Telekommunikationsteilnehmers (1) angezeigt wird.

3. Verfahren nach einem der vorgenannten Ansprüche, **dadurch gekennzeichnet, dass** die automatische Sprachansage vor der Nachricht auf der Mailbox (12) zunächst die Ansage (A) der ersten Zeitzone (I) des Heimatlandes (10) vorsieht, wobei nach der Ansage (A) der ersten Zeitzone (I) die Ansage (B) der zweiten Zeitzone (II) des Auslandes (11) vorgesehen wird.

4. Verfahren nach Anspruch 3, **dadurch gekennzeichnet, dass** nach der Ansage (A) der ersten Zeitzone (I) und der Ansage (B) der zweiten Zeitzone (II) die Ansage (C) einer weiteren Information über eine bevorzugte Rückrufzeit zum Rückruf des Teilnehmers per Sprachansage ausgegeben wird, der die Mailbox (12) besprochen hat.

5. Verfahren nach einem der vorgenannten Ansprüche, **dadurch gekennzeichnet, dass** die Ansage (A) der ersten Zeitzone (I) und die Ansage (B) der zweiten Zeitzone (II) einen jeweiligen Wochentag und eine jeweilige Uhrzeit umfasst.

6. Verfahren nach einem der vorgenannten Ansprüche, **dadurch gekennzeichnet, dass** die Ansage (C) der weiteren Information über eine bevorzugte Rückrufzeit zum Rückruf des Teilnehmers wenigstens eine Zeitspanne mit einer ersten Uhrzeit und einer zweiten Uhrzeit umfasst.

7. Verfahren nach einem der Ansprüche 4 bis 6, **dadurch gekennzeichnet, dass** mit der Ansage (C) der weiteren Information zusätzlich angesagt wird, dass der Teilnehmer in einer bevorzugten Zeitspanne in seinem aktuellen Ausland (11) zurückgerufen werden könnte, worauf die Ansage der Zeitspanne in der zweiten Zeitzone (II) folgt.

8. Telekommunikationssystem mit einem Server (101) eines Telekommunikationsanbieters (100) zur Ausführung eines Verfahrens zur Information eines Telekommunikationsteilnehmers (1) im Ausland (11), wobei der Telekommunikationsteilnehmer (1) dem Telekommunikationsanbieter (100) in einem Heimatland (10) durch eine Kundenbeziehung zugeordnet ist, und wobei das Heimatland (10) eine erste Zeitzone (I) und das Ausland (11) eine zweite Zeitzone (II) aufweist, **dadurch gekennzeichnet, dass** der Server (101) dazu ausgebildet ist, dass bei Nutzung einer vom Telekommunikationsanbieter (100) bereitgestellten Mailbox (12) wenigstens eine Information (13) über die erste Zeitzone (I) und die zweite Zeitzone (II) an den Telekommunikationsteilnehmer (1) mittels einer Sprachansage übermittelt wird, die vor der Wiedergabe eines auf der Mailbox gespeicherten und wiedergegebenen Anrufes (16) per automatischer Sprachansage angesagt wird.
